# EUROPÄISCHE PATENTSCHRIFT

(11) **EP 1 371 037 B1**
(45) Veröffentlichungstag und Bekanntmachung des Hinweises auf die Patenterteilung: **15.09.2010**
(21) Anmeldenummer: 02729955.1
(22) Anmeldetag: 04.03.2002
(51) Int. Cl.: G07F 19/00

(54) **VERFAHREN ZUR BEZAHLUNG VON INTERNET-INFORMATIONEN ÜBER DIE TELEFONRECHNUNG**
METHOD FOR PAYING FOR FEE-BASED DATA BY MEANS OF A TELEPHONE BILL
PROCEDE POUR PAYER DES INFORMATIONS ISSUES D'INTERNET PAR L'INTERMEDIAIRE D'UNE FACTURE TELEPHONIQUE

(30) Priorität: 13.03.2001 EP 01106164
(43) Veröffentlichungstag der Anmeldung: 17.12.2003
(73) Patentinhaber: Nokia Siemens Networks GmbH & Co. KG, 81541 München (DE)
(72) Erfinder: ZYGAN-MAUS, Renate, 81477 München (DE); UNGER, Stefan, 82008 Unterhaching (DE)
(86) Internationale Anmeldenummer: PCT/EP2002/002329
(87) Internationale Veröffentlichungsnummer: WO 2002/073555

(56) Entgegenhaltungen:
- EP-A- 0 814 589
- US-A- 5 949 875
- MARGULIES, ED: "IVR Meets the Internet" DIALOG GALE GROUP CO, September 1996 (1996-09), XP002935993

## Beschreibung

1.Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Worin liegt eine Besonderheit der Erfinung?
5. Ausführungsbeispiel[e] der Erfindung.

### Zu Punkt 1: Welches technische Problem soll durch Ihre Erfindung gelöst werden?

Es soll möglich sein, dass ein anonymer Internet-Nutzer, entgeltpflichtige Daten (Informationen bzw. SW-Produkte), die er mit einem PC über eine beliebige Internetverbindung empfängt, über seine Telefonrechnung bezahlt.

### Zu Punkt 2: Wie wurde dieses Problem bisher gelöst?

Da Bezahlvorgänge im Internet, die auf der (Ende-zu-Ende) Identifizierung und Authentisierung des Käufers (= Internet-Nutzers) basieren (z.B. über Kreditkartennummern oder über Zertifikate) relativ viel technischen und organisatorischen Aufwand erfordern, gibt es seit längerem die Idee, auf die Identifizierung und Authentisierung des Käufers zu verzichten und stattdessen - insbesondere für das Herunterladen von Daten aus dem Internet - eine Bezahlung über den öffentlichen Telefondienst zu ermöglichen.

Bei bisher bekannten Lösungen über einen öffentlichen Telefondienst werden die entgeltpflichtigen Daten von Servern bereitgestellt, zu denen der Zugang über eine Telefonverbindung mit besonderer Vergebührung (Nutzung einer speziellen Telefon- Mehrwertdienstrufnummer) hergestellt wird und über die dann auch die TCP/IP-basierte Datenübertragung erfolgt. Die Bezahlung wird über das Entgelt für diese Telefonverbindung abgewickelt.

### Zu Punkt 3: In welcher Weise löst Ihre Erfindung das angegebene technische Problem (geben Sie Vorteile an)?

Bei dem erfindungsgemäßen Verfahren wird ebenfalls die Vergebührung einer Telefonverbindung zu einer speziellen Telefondienst-Rufnummer benutzt. Die TCP/IP-basierte Übertragung der zu bezahlenden beliebigen elektronischen Daten bzw. Informationen erfolgt jedoch nicht über eine Telefonverbindung zu dem die zu bezahlenden Daten bzw. Informationen bereitstellenden Server, sondern über einen speziellen Server, der im folgenden auch als Bezahlungs-Dienst-Server, Bezahlungssteuerungs-Server oder Korrelationsserver bezeichnet wird. Der Bezahlungs-Dienst-Server korreliert eine Telefonverbindung zwischen dem Käufer und dem speziellen Telefondienst (wird im folgenden auch als Telefon-Mehrwertdienst bezeichnet) mit einer Datenübertragung über eine TCP/IP-Verbindung zwischen dem Käufer und dem Server des Internet-Inhalt-Anbieters. Voraussetzung des Verfahrens ist, dass der Käufer die Möglichkeit hat, parallel zu seiner Internet-Verbindung eine Telefonverbindung zu einem Telefon-Mehrwertdienst herzustellen (z.B. bei analogen Dialin Internetnutzern also eine zweite Leitung oder ein Mobilfunktelefon oder ein Telefondienst über die bestehende Internet-Verbindung, oder ISDN oder Internet-Zugang über xDSL).

Der vom Internet-Nutzer in Form von Telefongebühren zu zahlende Kaufbetrag wird zwischen dem Informationsverkäufer, dem Bezahlungs-Dienst-Anbieter und dem Telefon-Mehrwertdienst-Anbieter nach zuvor vereinbarten Anteilen aufgeteilt.

Der Informationsverkäufer ist Kunde des Bezahlungs-Dienst-Anbieters. Der Bezahlungs-Dienst-Anbieter kann mit dem Telefon-Mehrwertdienst-Anbieter identisch sein. Ein nicht mit dem Telefon-Mehrwertdienst-Anbieter identischer Bezahlungs-Dienst-Anbieter benötigt eine besondere Geschäftsbeziehung mit einem Telefon-Mehrwertdienst-Anbieter für die Überwachung der Telefonverbindung zwischen dem Käufer und dem speziellen Telefon-Mehrwertdienst sowie für das Inkasso des Kaufbetrags.

Die Überwachung des Telefon-Mehrwertdienstrufs durch den Telefon-Mehrwertdienst-Anbieter erfolgt beispielsweise durch einen IN Service Control Point (SCP). Für einen IN basierten Dienst ist die Dienstlogik im SCP, z.B. zum Aufbau der Verbindung und Steuerung der Vergebührung. Überwachung der Verbindung heißt z.B. primär Überwachung auf Abbruch der Verbindung durch den Anrufer bzw. auf erfolgreiches Verbindungsende. Technisch ist ein Interface zwischen dem Server des Telefon-Mehrwertdienst-Anbieters und dem Server des Bezahlungs-Dienst-Anbieters erforderlich um Informationen über der Rufstatus zu transportieren, z.B. zwecks Abbruch der Datenverbindung falls der Anrufer den Ruf abbricht und die erforderlichen Gebühren noch nicht vollständig aufgelaufen sind.

Die Vorteile dieses neuen Verfahrens gegenüber dem oben beschriebenen bereits bekannten Verfahren sind:
- Eine Trennung der Internet-Zugangsverbindung und der Aufbau einer neuen Verbindung über das Telefonnetz zu speziellen Servern des Internet-Inhalt-Anbieters ist nicht erforderlich.
- Das neue Verfahren ist im Gegensatz zu dem bisher bekannten Verfahren auch anwendbar für Internet-Nutzer, deren Internet-Zugang nicht über eine Telefonverbindung sondern über eine beliebige andere Zugangsart erfolgt (z.B. über einen xDSL -Anschluß oder einen Kabelanschluß)
- Das neue Verfahren ermöglicht einer unabhängigen dritten Partei (dem Bezahlungs-Dienst-Anbieter, der den Korrelationsserver betreibt) Details des TCP/IP-basierten Informationsübertragungsvorganges (verwendete TCP/IP-Adressen und Portnummern, Zeit, Dauer, übertragene Datenmenge) und des Telefondienst-basierten Bezahlvorganges (verwendete Telefonnummern, Zeit, Dauer der Telefonverbindung,ggf. angefallene Gebühren) aufzuzeichnen für eine etwaige spätere Überprüfung.

### Zu Punkt 4: Worin liegt eine Besonderheit der Erfinung?

Eine Besonderheit der Erfinung liegt in der Korrelation eines Telefondienstes mit einer Datenübertragung über eine unabhängige Daten-Verbindung mithilfe eines speziellen Servers, der sowohl Zugang zu Datennetz-Funktionen als auch Zugang zu Telefonnetz-Funktionen hat. Damit wird es möglich, Datennnetz-Informationen zu kaufen und zu verkaufen, und zwar ohne eine Identifizierung des Datennnetz-Nutzers und ohne eine direkte Geschäftsbeziehung zwischen dem Informationsanbieter und dem Käufer.

### Zu Punkt 5: Ausführungsbeispiel[e] der Erfindung

Ablauf einer möglichen Realisierung des erfindungsgemäßen Verfahrens:
(siehe unterstützend dazu auch die entsprechend des folgenden Ablaufs nummerierte Figur)
   1. Ein beliebiger Internet-Nutzer findet eine Web-Seite mit dem ihn interessierenden Angebot. Der Eigentümer der Web-Seite hat auf seiner Web-Seite einen "Click-to-Pay-via-phone" Button eingebaut, den der (anonyme) Internet-Nutzer anklickt, wenn er den Kauf der angebotenen Information einleiten möchte.
   2. Mit Standard-Internet-Verfahren (HTTP - Protokoll) wird durch das Anklicken des "Click-to-Pay-via-phone" Buttons eine HTTP - Verbindung zwischen dem PC des Internet-Nutzers und einem Server des Bezahlungs-Dienst-Anbieters hergestellt. Dabei wird eine Referenz auf die gewählte entgeltpflichtige Information von der Web-Seite des Informationsanbieters mit übertragen (Standard-Leistungsmerkmal von HTTP).
   3. Der Server des Bezahlungs-Dienst-Anbieters eröffnet einen HTTPS - Dialog mit dem Käufer (ein Nutzer-Zertifikat ist nicht erforderlich, ein Server-Zertifikat ist dafür ausreichend), und generiert mit einem Zufallsgenerator eine diesem Vorgang zugeordnete Korrelationsnummer (z.B. die Ziffernfolge 123). Diese Korrelationsnummer wird dem Käufer über HTTPS mitgeteilt als Bestandteil einer zu wählenden Telefon-Mehrwertdienstenummer sowie gegebenenfalls zusätzlich eine User-Identifikationsnummer (PIN).
   4. Der Käufer wählt die angegebene Telefon-Mehrwertdienstenummer. Das Telefonnetz benachrichtigt den Korrelationsserver über Standard- IN - Funktionen darüber. Der Korrelationsserver identifiziert anhand der empfangenen Korrelationsnummer den Vorgang und fragt gegebenenfalls den Anrufer mittels Standard-IN-Funktionen nach der dem Vorgang zugeordneten PIN. Erfolgt der Anruf des Käufers nicht innerhalb eines vorgebbaren Zeitraums oder ist die vom Anrufer angegebene PIN falsch, wird der gesamte Vorgang ungültig.
   5. Falls die angegebene PIN mit der vergebenen PIN für den durch die Korrelationsnummer identifizierten Vorgang übereinstimmt, wird dem Käufer eine geeignete Ansage über den aktivierten Dienst und die anfallenden Telefongebühren gespielt.
   6. Der Server des Bezahlungs-Dienst-Anbieters überwacht diese Telefonverbindung (d.h. Überwachen auf Abbruchfälle bzw. erfolgreiches Verbindungsende) und ggf. auch die anfallenden Telefongebühren (d.h. Überwachen bis alle Gebühren aufgelaufen sind und die Dienstlogik den Ruf selbst auslösen kann). Gleichzeitig stellt er eine TCP/IP-Verbindung zum Server des Informationsanbieters her, über die er die nachgefragten Informationen empfängt und an den PC des Käufers weiterleitet.
   Es besteht keine direkte zeitliche Abhängigkeit zwischen der Dauer der Telefonverbindung und der Dauer der TCP/IP-Verbindung. Die Telefonverbindung wird nur solange aufrecht erhalten, bis die erforderlichen Gebühren aufgelaufen sind. Danach kann die Telefon-Verbindung durch den Server des Bezahlungs-Dienst-Anbieters beendet werden. Jeder Bezahlungsvorgang, auch ein nicht erfolgreicher Vorgang, wird vom Server des Bezahlungs-Dienst-Anbieters protokolliert. Der Kunde des Bezahlungs-Dienst-Anbieters ist der Informations-Anbieter, der den Internet-Bezahlungsdienst einsetzt.

In einer Variante des Internet-Bezahlungsdienstes kann auch ein existierender, z.B. IN-basierter Telefon-Mehrwertdienst, verwendet werden, welcher auch von einem anderen Dienstanbieter als dem Anbieter des Internet-Bezahlungsdienstes geleistet werden kann. In diesem Fall vermittelt und überwacht der Bezahlungs-Dienst-Server eine Telefonverbindung des Käufers zu diesem Telefon-Mehrwertdienst.

### Verwendete Abkürzungen:

- **CdPN:**: **Called Party Number, Telefon- Mehrwertdienstrufnummer**
- **Korr.ID:**: **Korrelationsidentifier, Korrelationsnummer**
- **PIN:**: **Nutzer-Identifikationsnummer**
- **SAC:**: **Service Access Code**
- **HTTP:**: **Hypertext Transfer Protokoll**
- **HTTPS:**: **Hypertext Transfer Protokoll Secure**

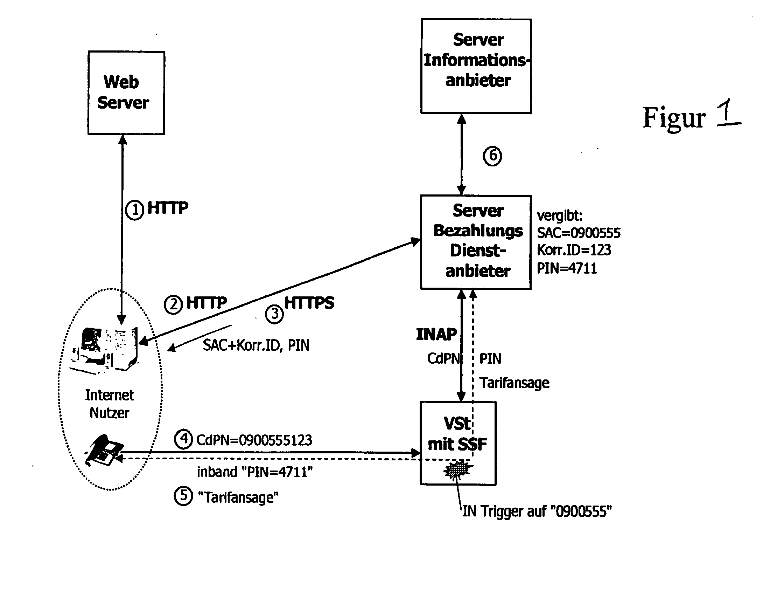

## Patentansprüche

1. Verfahren zur Bezahlung von entgeltpflichtigen Daten, die über ein Netz angeboten werden, demgemäß
- durch einen Netz-Nutzer entgeltpflichtige Daten, auf die der Netz-Nutzer über einen Angebots-Server hingewiesen wird, angefordert werden,
- daraufhin dem Netz-Nutzer von dem Angebots-Server eine Referenz auf die entgeltpflichtigen Daten sowie auf einen Bezahlungsdienst-Server mitgeteilt wird,
- daraufhin die genannten entgeltpflichtigen Daten unter Angabe ihrer Referenz von dem genannten Bezahlungsdienst-Server angefordert werden,
- daraufhin dem Netz-Nutzer von dem Bezahlungsdienst-Server eine zu wählende Telefondienst-Rufnummer mitgeteilt wird, wobei die Telefondienst-Rufnummer als Bestandteil eine der Nutzeranforderung zugeordnete Korrelationsnummer enthält,
- durch Wahl der genannten Telefondienst-Rufnummer für den Internet-Nutzer eine Telefon-Verbindung zu dem zugehörigen Telefondienst aufgebaut wird,
- durch den genannten Telefondienst dem Bezahlungs-Dienst-Server die Korrelationsnummer mitgeteilt wird, anhand derer der Bezahlungdienst-Server die genannte Nutzeranforderung identifiziert,
- daraufhin von dem Bezahlungs-Dienst-Server zum einen die Vergebührung des Vorgangs über die Vergebührung der genannten Telefonverbindung veranlaßt wird und zum anderen die genannten entgeltpflichtigen Daten über die angegebene Referenz beschafft und über eine Datenverbindung an den Netz-Nutzer weitergeleitet werden.

2. Verfahren nach Anspruch 1,
**dadurch gekennzeichnet, daß**
- dem Netz-Nutzer von dem Bezahlungsdienst-Server zusätzlich zu der genannten Telefondienst-Rufnummer eine PIN mitgeteilt wird,
- der Netz-Nutzer über die Telefon-Verbindung von dem Bezahlungdienst-Server nach der zu der Nutzeranforderung gehörigen Nutzer-Identifikationsnummer abgefragt wird, nachdem die genannte Nutzeranforderung anhand der Korrelationsnummer identifiziert wurde,
- von dem Bezahlungs-Dienst-Server nach Empfang der korrekten Angabe der Nutzer-Identifikationsnummer die Vergebührung des Vorgangs über die Vergebührung der genannten Telefonverbindung veranlaßt wird und die genannten entgeltpflichtigen Daten über die angegebene Referenz beschafft und über eine Datenverbindung an den Netz-Nutzer weitergeleitet werden.

3. Verfahren nach einem der Ansprüche 1 oder 2,
**dadurch gekennzeichnet, daß**
es sich bei dem Netz-Nutzer um einen Internet-Nutzer und bei der genannten Datenverbindung um eine TCP/IP-Verbindung handelt.

4. Verfahren nach einem der Ansprüche 1 bis 3,
**dadurch gekennzeichnet, daß**
der Anbieter des Bezahlungsdienstes mit dem Anbieter des Telefondienstes identisch ist.

5. Verfahren nach einem der Ansprüche 1 bis 4,
**dadurch gekennzeichnet, daß**
die genannte Ansage über den aktivierten Dienst und die anfallenden Telefongebühren über die Telefonverbindung zugespielt wird.

6. Bezahlungsdienst-Server, der
- von einem Nutzer eine Anforderung zur Übertragung von entgeltpflichtigen Daten empfängt, wobei die Anforderung eine Referenz auf die Quelle der entgeltpflichtigen Daten enthält,
- daraufhin eine dieser Nutzeranforderung zugeordnete Korrelationsnummer erzeugt, die er dem Nutzer als Bestandteil einer zu wählenden Telefondienst-Rufnummer mitteilt,
- nachdem der Nutzer eine Telefon-Verbindung zu dem zugehörigen Telefondienst aufgebaut hat, von dem genannten Telefondienst die Korrelationsnummer mitgeteilt bekommt, wodurch er die genannte Nutzeranforderung identifiziert,
- daraufhin zum einen die Vergebührung des Vorgangs über die Vergebührung der genannten Telefonverbindung veranlaßt und zum anderen die genannte Übertragung der entgeltpflichtigen Daten durchführt, indem er sich die Daten von der Quelle der Daten besorgt und über eine Datenverbindung zu dem Netz-Nutzer weiterleitet.

7. Bezahlungsdienst-Server nach Anspruch 6,
**dadurch gekennzeichnet, daß**
- er dem Nutzer zusätzlich zu der genannten Telefondienst-Rufnummer eine Nutzer-Identifikationsnummer (PIN) mitteilt,
- er den Nutzer über die Telefon-Verbindung nach der zu der Nutzeranforderung gehörigen Nutzer-Identifikationsnummer abfrägt, nachdem er die genannte Nutzeranforderung anhand der Korrelationsnummer identifiziert hat,
- er nach Empfang der korrekten Angabe der Nutzer-Identifikationsnummer die Vergebührung des Vorgangs über die Vergebührung der genannten Telefonverbindung veranlaßt und die genannte Übertragung von Daten durchführt.

8. Bezahlungsdienst-Server nach Anspruch 6 oder 7,
**dadurch gekennzeichnet, daß**
der genannten Telefondienst in dem Bezahlungs-Dienst-Server implemetiert ist.

9. Bezahlungsdienst-Server nach einem der Ansprüche 6 bis 8,
**dadurch gekennzeichnet, daß**
er Details des Datendienst-basierten Datenübertragungsvorganges und/oder des Telefondienst-basierten Bezahlvorganges aufzeichnet

## Claims

1. Method for paying for data which require a payment and which are provided via a network, according to which
- a network user requests data which require a payment, said data being indicated by the network user via a provision server,
- the network user is then notified by the provision server of a reference to the data which require a payment and to a payment service server,
- said data which require a payment are then requested from said payment service server by stating their reference
- the network user is then notified by the payment service server of a telephone service number which needs to be dialed, said telephone service number containing an element which is a correlation number associated with the user request,
- said telephone service number is dialed in order to set up a telephone connection to the associated telephone service for the Internet user,
- said telephone service notifies the payment service server of the correlation number, which the payment service server uses to identify said user request,
- the payment service server then firstly prompts the billing for the process by billing for said telephone connection and secondly procures said data which require a payment using the stated reference and forwards them to the network user via a data link.

2. Method according to Claim 1,
**characterized in that**
- the network user is notified by the payment service server of a PIN in addition to said telephone service number,
- the network user is asked for the user identification number associated with the user request by the payment service server via the telephone connection after said user request has been identified using the correlation number,
- the payment service server, having received the correct statement of the user identification number, prompts the billing for the process by billing for said telephone connection and procures said data which require a payment using the stated reference and forwards them to the network user via a data link.

3. Method according to one of claims 1 and 2,
**characterized in that**
the network user is an Internet user and said data link is a TCP/IP connection.

4. Method according to one of claims 1 to 3,
**characterized in that**
the provider of the payment service is identical to the provider of the telephone service.

5. Method according to one of claims 1 to 4,
**characterized in that**
said announcement about the activated service and the telephone charges incurred is played via the telephone connection.

6. Payment service server which
- receives from a user a request for the transmission of data which require a payment, wherein the request contains a reference to the source of the data which require a payment,
- then produces a correlation number which is associated with this user request and which it communicates to the user as an element of a telephone service number which needs to be dialed,
- after the user has set up a telephone connection to the associated telephone service, is notified by said telephone service of a correlation number, which it uses to identify said user request,
- then firstly prompts the billing for the process by billing for said telephone connection and secondly performs said transmission of the data which require a payment by procuring the data from a source of the data and forwarding them to the network user via a data link.

7. Payment service server according to Claim 6, **characterized in that**
- it notifies the user of a user identification number (PIN) in addition to said telephone service number,
- it asks the user for the user identification number associated with the user request via the telephone connection after it has identified said user request using the correlation number,
- having received the correct statement of the user identification number, it prompts the billing for the process by billing for said telephone connection and performs said transmission of data.

8. Payment service server according to Claim 6 or 7,
**characterized in that**
said telephone service is implemented in the payment service server.

9. Payment service server according to one of claims 6 to 8,
**characterized in that**
it records details of the data-service-based data transmission process and/or of the telephone-service-based payment process.

## Revendications

1. Procédé pour payer des données payantes qui sont offertes par l'intermédiaire d'un réseau, selon lequel
- un utilisateur du réseau demande des données payantes qui lui sont proposées par l'intermédiaire d'un serveur d'offre ;
- le serveur d'offre communique ensuite à l'utilisateur du réseau une référence aux données payantes ainsi qu'à un serveur de service de paiement ;
- lesdites données payantes sont ensuite demandées audit serveur du service de paiement avec mention de leur référence ;
- le serveur du service de paiement communique ensuite à l'utilisateur du réseau un numéro d'appel de service téléphonique à composer, le numéro d'appel du service téléphonique contenant, en tant que partie intégrante, un numéro de corrélation associé à la demande de l'utilisateur ;
- la composition dudit numéro d'appel du service téléphonique permet l'établissement, pour l'utilisateur d'internet, d'une liaison téléphonique avec le service téléphonique associé ;
- le numéro de corrélation à l'aide duquel le serveur du service de paiement identifie ladite demande de l'utilisateur est communiqué au serveur du service de paiement par ledit service téléphonique ;
- ensuite, le serveur du service de paiement, d'une part, fait effectuer la facturation de l'opération par l'intermédiaire de la facturation de ladite liaison téléphonique et, d'autre part, procure lesdites données payantes par l'intermédiaire de la référence indiquée et les retransmet à l'utilisateur du réseau via une liaison de données.

2. Procédé selon la revendication 1, **caractérisé en ce que**
- un PIN est communiqué à l'utilisateur du réseau par le serveur du service de paiement en plus dudit numéro d'appel du service téléphonique ;
- le serveur du service de paiement, via la liaison téléphonique, demande à l'utilisateur du réseau le numéro d'identification de l'utilisateur associé à la demande de l'utilisateur après que ladite demande de l'utilisateur a été identifiée à l'aide du numéro de corrélation ;
- le serveur du service de paiement, après la réception de la mention correcte du numéro d'identification de l'utilisateur, fait effectuer la facturation de l'opération par l'intermédiaire de la facturation de ladite liaison téléphonique et procure lesdites données payantes par l'intermédiaire de la référence indiquée et les retransmet à l'utilisateur du réseau via une liaison de données.

3. Procédé selon l'une des revendications 1 ou 2, **caractérisé en ce que** l'utilisateur du réseau est un utilisateur d'internet et ladite liaison de données est une liaison TCP/IP.

4. Procédé selon l'une des revendications 1 à 3, **caractérisé en ce que** l'offreur du service de paiement est identique à l'offreur du service téléphonique.

5. Procédé selon l'une des revendications 1 à 4, **caractérisé en ce que** ladite annonce est communiquée par l'intermédiaire du service activé et les frais de téléphone exposés sont communiqués via la liaison téléphonique.

6. Serveur de service de paiement qui
- reçoit d'un utilisateur une demande de transmission de données payantes, la demande contenant une référence à la source des données payantes ;
- génère ensuite un numéro de corrélation associé à cette demande de l'utilisateur et qu'il communique à l'utilisateur en tant que partie intégrante d'un numéro d'appel de service téléphonique à composer ;
- se voit communiquer, après que l'utilisateur a établi une liaison téléphonique avec le service téléphonique associé, le numéro de corrélation par ledit service téléphonique, ceci lui permettant d'identifier ladite demande de l'utilisateur ;
- ensuite, d'une part, fait effectuer la facturation de l'opération par l'intermédiaire de la facturation de ladite liaison téléphonique et, d'autre part, effectue ladite transmission des données payantes en se procurant les données à la source de données et en les retransmettant à l'utilisateur du réseau via une liaison de données.

7. Serveur de service de paiement selon la revendication 6, **caractérisé en ce que**
- il communique à l'utilisateur un numéro d'identification d'utilisateur (PIN) en plus dudit numéro d'appel du service téléphonique ;
- il demande à l'utilisateur, via la liaison téléphonique, le numéro d'identification d'utilisateur associé à la demande de l'utilisateur après avoir identifié ladite demande de l'utilisateur à l'aide du numéro de corrélation ;
- après réception de la mention correcte du numéro d'identification de l'utilisateur, il fait effectuer la facturation de l'opération par l'intermédiaire de la facturation de ladite liaison téléphonique et il exécute ladite transmission de données.

8. Serveur de service de paiement selon la revendication 6 ou 7, **caractérisé en ce que** ledit service téléphonique est implémenté dans le serveur du service de paiement.

9. Serveur de service de paiement selon l'une des revendications 6 à 8, **caractérisé en ce qu'**il enregistre des détails de l'opération de transmission de données basée sur un service de données et/ou de l'opération de paiement basée sur un service téléphonique.
